**Europäisches Patentamt**

**European Patent Office**

**Office européen des brevets**

(19)

(11) Veröffentlichungsnummer: **0 185 008**
**B1**

(12) **EUROPÄISCHE PATENTSCHRIFT**

(45) Veröffentlichungstag der Patentschrift:
**01.06.88**

(51) Int. Cl.⁴: **B 65 G 15/34**

(21) Anmeldenummer: **85890297.6**

(22) Anmeldetag: **29.11.85**

(54) **Quersteif ausgerüsteter Fördergurt.**

(30) Priorität: **13.12.84 AT 3953/84**

(43) Veröffentlichungstag der Anmeldung:
**18.06.86 Patentblatt 86/25**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**DE - A - 1 957 452**
**DE - A - 2 557 025**
**DE - A - 2 911 753**
**DE - A - 3 150 259**

(73) Patentinhaber: **Semperit Aktiengesellschaft,
Modecenterstrasse 22, A-1031 Wien (AT)**

(72) Erfinder: **Magritsch, Anna, Dipl.-Ing., Erlaufstrasse 16/8,
A-2344 Maria Enzersdorf (AT)**
Erfinder: **Ecker, Heinrich, Eugengasse 23, A-2500 Baden
(AT)**

(74) Vertreter: **Müller, Hans-Jürgen, Dipl.-Ing. et al, Müller,
Schupfner & Gauger
Lucile-Grahn-Strasse 38 Postfach 80 13 69,
D-8000 München 80 (DE)**

## Beschreibung

Die Erfindung betrifft einen quersteif ausgerüsteten Fördergurt aus elastomerem Werkstoff der im Oberbegriff des Patentanspruchs 1 genannten Gattung.

Ein derartiger Fördergurt mit einer gewissen Quersteifigkeit ist bereits aus der DE-A-1 957 452 bekannt. Dabei werden ausser einer Lage von in Längsrichtung verlaufenden Zugträgern aus Nylon und ausser zweier Lagen mit unter einem Neigungswinkel von 16° zur Laufrichtung verlaufenden und sich in unterschiedlichen Schichten kreuzenden Korden auch solche Korde verwendet, welche nicht winklig, d.h. schräg, sonderen quer zur Laufrichtung des Fördergurtes verlaufen. Diese querverlaufenden Korde sollen dem Fördergurt zwar einen gewissen Widerstand gegenüber dem Querdruck des Bandes verleihen, aber so flexibel sein, dass der Fördergurt im Querschnitt nach Art einer Mulde oder sogar einer Rinne und eines Rohres geformt werden kann. Dadurch, dass für die Querkorde flexibler Stahl, flexible Monofile aus Textilmaterial, flexibler Hartgummi oder flexible Makrofile verwendet werden, wird zwar einer Querkontraktion entgegengewirkt, aber keine genügende Quersteifigkeit erzielt. Bei Verwendung von Stahlkorden wird auch die Herstellung erschwert, da die Fördergurte nachträglich nicht mehr ohne weiteres auf die gewünschte Breite zugeschnitten werden können.

Darüber hinaus sind solche Förderbänder beispielsweise aus der DE-A-3 150 259 bekannt, die quer zur Laufrichtung nicht steif, sondern gut biegbar sein sollen. Um die in Laufrichtung ausgerichteten Zugträger gegen Beschädigung durch aus grosser Höhe auf das Förderband herabfallender spitzer und schwerer Gegenstände zu vermeiden, wird oberhalb der Lage aus längsverlaufenden Zugträgern eine Schutzlage aus sich kreuzenden hochelastischen Korden verwendet, die sich unter einem Winkel zwischen etwa 55 bis 70° zur Laufrichtung kreuzen. Mit diesem hochelastischen Netz sind Fördergurte jedoch nicht quersteif ausrüstbar. Im Gegenteil wird die Muldenbildung hierdurch gefördert, was besonders dann unerwünscht ist, wenn die Fördergurte, wie bei Bunkerabdeckungen, begehbar sein sollen oder wenn die Fördergurte über seitlich hochstehende Kanten, insbesondere Wellkanten, seitlich abgestützt werden, da die Kanten bei einem muldenartigen Durchbiegen von seitlichen Führungsrollen abrutschen.

Darüber hinaus sind Fördergurte bekannt, bei denen in Längsrichtung verlaufende Zugträger mit quer dazu verlaufenden Polyesterfäden verwebt sind. Aufgrund dieser Verwebung ist aber die Haftfläche der Polyesterfäden zum elastomeren Material, wie Gummi, in das sie eingebettet sind, vermindert. Infolge der ständigen Beanspruchung des Fördergurtes lösen sich solche Polyesterfäden dann leichter von dem umgebenden elastomeren Material mit der Folge einer zunehmenden Verminderung der Wirksamkeit der Querversteifung und auch der Flexibilität in Längsrichtung.

Der Erfindung liegt die Aufgabe zugrunde, einen Fördergurt der eingangs genannten Art hinsichtlich der Quersteifigkeit mit einfachen Mitteln bei gleichzeitig guter Flexibilität in Längsrichtung zu verbessern. Ausserdem soll dieser Fördergurt auch mit einfachen Mitteln, beispielsweise durch Zuschneiden, auf die gewünschte Breite bringbar sein.

Die Erfindung ist im Patentanspruch 1 gekennzeichnet und in Unteransprüchen sind weitere Verbesserungen und Ausbildungen derselben beansprucht.

Bei der Erfindung werden die schräg unter einem Neigungswinkel zur Laufrichtung verlaufenden Korde dadurch versteift bzw. zu Steifkorden ausgebildet, dass deren Fäden bzw. Fasern mit einem solchen Haftmittel getränkt werden, das den Korden durch Aushärten die gewünschte Steifigkeit vermittelt, wodurch jeder einzelne Steifkorde gewissermassen als «Monofil» wirkt, obwohl er eigentlich aus einer Mehrzahl, insbesondere Vielzahl einzelner Fasern bzw. Fäden zusammengesetzt ist. An sich ist es aus der DE-A-2 911 753 bereits bekannt, Fäden aus aromatischem Polyamid einer Feinheit von 1670 oder 2500 dtex zu Litzen bzw. Seilen zu vereinen und nach Eintauchen in eine aushärtbare Kunstharzkomposition als Verbindungsmittel zu versteifen, hierbei geht es aber darum, die Einzelfäden gegeneinander mit dem Ziele einer verbesserten Zugfestigkeit festzulegen. Solche Steifseile bzw. Steiflitzen sind deshalb auch als längsverlaufende Zugträger im Fördergurt angeordnet, damit eine gleichmässige Zugübertragung in Laufrichtung desselben über dessen gesamte Breite ermöglicht wird.

Bei der Erfindung werden die Steifkorde aber unter einem Neigungswinkel von mehr als 45° schräg zur Laufrichtung ausgerichtet, ohne dass diese normal, d.h. 90° zur Laufrichtung ausgerichtet sein müssen.

Es empfiehlt sich, wenn mindestens eine solche Versteifungslage oberhalb und/oder unterhalb der Lage mit den in Laufrichtung verlaufenden Zugträgern angeordnet ist.

Durch den erfindungsgemässen Fördergurt werden die Nachteile der vorbekannten Ausführungen vermieden. Die als Monofile wirkenden Steifkorde bedingen durch ihren hohen Biegemodul eine ausgezeichnete Quersteifigkeit, die über die gesamte Lebensdauer des Gurtes gleichbleibend hoch erhalten bleibt. Gleichzeitig kann der Fördergurt je nach dem Neigungswinkel der Steifkorde zur Laufrichtung — und zur Normalen dazu — hochflexibel gehalten werden. Besonders vorteilhaft ist der erfindungsgemässe Fördergurt dadurch, dass der Gurt in einer grossen Breite gefertigt werden kann und der fertige Gurt auf beliebig weniger breite Bahnen schneidbar ist. Das Herstellungsverfahren gestaltet sich dadurch rationell und kostengünstig.

Bei einer bevorzugten Ausführungsform der Erfindung sind zumindest zwei Versteifungslagen im Fördergurt vorgesehen, deren in unterschiedlichen Lagen angeordneten Steifkorde einander kreuzen. Diese Ausführungsform ist dann besonders vorteilhaft, wenn auch eine in Längsrichtung wirkende Biegesteifigkeit des Fördergurtes erzielt werden soll, wie es beispielsweise bei Bunkerabdeckgurten vorteilhaft ist.

Ein besonders günstiger, die erforderliche Quersteifigkeit bewirkender Biegemodul wird dann erreicht, wenn erfindungsgemäss die Steifkorde eine Gesamtstärke von etwa 5000 bis 25 000 dtex aufweisen.

Bevorzugt werden als Filamente bzw. Fäden für die Steifkorde dehnungsarme vollsynthetische Fasern aus beispielsweise Polyester oder aromatischen Polyamiden verwendet. Die besonders gute Eignung dieser Fasern basiert auf ihrer Materialfestigkeit bei niedriger Dehnung.

Als besonders geeignet haben sich erfindungsgemäss Steifkorde erwiesen, die aus den Filamenten bzw. Fäden durch Verdrehen und Verzwirnen sowie Durchtränken mit einem härtbaren Haftmittel und Aushärten desselben gebildet sind. Durch diese Präparation ist der hohe Biegemodul erzielbar, der nahezu dem Biegemodul von Stahlkorden gleichkommt.

Durch eine weitere erfindungsgemässe Massnahme lässt sich die Quersteifigkeit des Fördergurtes variieren. Diese Massnahme besteht darin, dass die Steifkorde in den Versteifungseinlagen in einer Teilung von 5 bis 200 Korde pro 10 cm vorgesehen sind.

Um die Quersteifigkeit des erfindungsgemässen Fördergurtes zusätzlich noch zu erhöhen, wird einseitig des Zugträgers, vorzugsweise zwischen diesem und der Versteifungslage, eine Zwischenlage aus in ein Elastomer eingebetteten, quer zur Laufrichtung orientierten textilen Fasern, die mit dem Elastomer haftend verbunden sind, eingebettet.

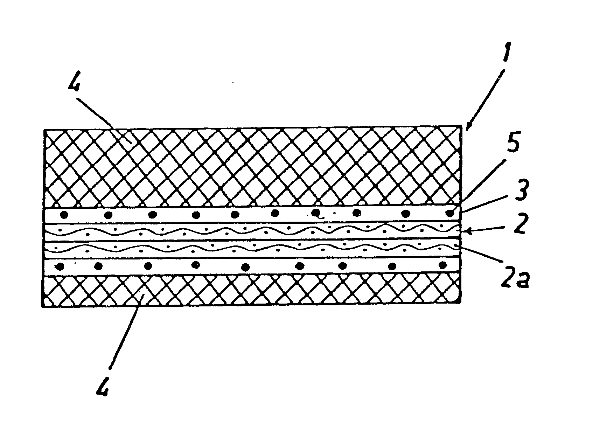

Weitere Merkmale, Vorteile und Einzelheiten der Erfindung werden anhand des in der Zeichnung dargestellten Ausführungsbeispieles eines erfindungsgemässen Fördergurtes näher beschrieben. Die Zeichnung zeigt einen Querschnitt durch ein Teilstück des Fördergurtes in Längsrichtung.

Der Fördergurt 1 weist zumindest eine Zugträgerlage 2a auf, die aus in ein Elastomer, beispielsweise Gummi, eingebetteten Zugelementen als Zugträger 2 bekannter Art aus textilem Material, Glas, Stahl oder Polyamid bestehen. Im vorliegenden Ausführungsbeispiel ist der Zugträger 2 aus zwei derartigen Zugträgerlagen 2a gebildet. Zwischen dem Zugträger 2 und je einer oberen und unteren Decklage 4, die ebenfalls aus einem Elastomer, beispielsweise Gummi oder einer PVC-Mischung besteht, ist je eine Versteifungslage 3 eingebettet.

Jede Versteifungslage 3 ist aus in ein Elastomer eingebetteten, parallel zueinander verlaufenden Steifkorden 5 aufgebaut. Als Filamente bzw. Fäden für die Steifkorde 5 finden bevorzugt dehnungsarme, vollsynthetische Fasern aus beispielsweise Polyester oder Polyamid «ARAMID» Verwendung. Durch Verdrehen oder Verzwirnen der Fasern entsteht ein Kord, der einer versteifenden Präparation unterzogen wird. Hiebei wird der Kord mit einer Lösung oder Dispersion aus einem härtbaren Haftmittel, beispielsweise einer Isocyanatlösung oder einem Epoxydharz, durchtränkt. Nach dem Aushärten des Haftmittels, vorzugsweise bei erhöhter Temperatur, ist der Kord zu einem monofilähnlichen Gebilde versteift.

In jeder Versteifungslage 3 verlaufen die Steifkorde 5 schräg unter einem Neigungswinkel von mindestens 45° zur Laufrichtung des Fördergurtes 1. Im Fördergurt 1 ist zumindest eine Versteifungslage 3 vorgesehen, die entweder ober- oder unterhalb des Zugträgers 2 angeordnet ist. Sind zumindest zwei derartige Versteifungslagen 3 im Fördergurt 1 eingebettet, so kann es für bestimmte Verwendungszwecke vorteilhaft sein, wenn sich die inneralb einer Versteifungslage 3 vorgesehenen Steifkorde 5 mit den Steifkorden 5 der zweiten Versteifungslage 3 kreuzen.

In jeder Versteifungslage 3 sind die Steifkorde 5 vorzugsweise in einer Teilung von 5 bis 200 Fäden pro 10 cm angeordet. Die Steifkorde 5 weisen hierbei eine Gesamtstärke von 5000 bis 25 000 dtex auf.

Um die Quersteifigkeit des erfindungsgemässen Fördergurtes zusätzlich noch zu erhöhen, kann zumindest einseitig des Zugträgers 2, vorzugsweise zwischen diesem und der Versteifungslage 3, eine Zwischenlage aus in ein Elastomer eingebetteten, quer zur Laufrichtung orientierten textilen Fasern, die mit dem Elastomer haftend verbunden sind, eingefügt sein.

**Patentansprüche**

1. Quersteif ausgerüsteter Fördergurt aus elastomerem Werkstoff (4), in den mindestens eine Lage von in Laufrichtung verlaufenden Zugträgern (2) und mindestens eine Lage mit unter einem Neigungswinkel zur Laufrichtung verlaufenden Korden aus vollsynthetischen Fasern eingebettet sind, dadurch gekennzeichnet, dass die Korde als Steifkorde (5), deren die Fäden tränkendes Haftmittel ausgehärtet ist, ausgebildet, und in mindestens einer Versteifungslage (3) winkligi unter einem Neigungswinkel von mehr als 45° zur Laufrichtung ausgerichtet sind.

2. Fördergurt nach Anspruch 1, dadurch gekennzeichnet, dass zumindest zwei Versteifungslagen (3) vorgesehen sind, bei denen sich die Steifkorde (5) untereinander kreuzen.

3. Fördergurt nach Anspruch 1 oder 2, dadurch gekennzeichnet, dass die Steifkorde (5) eine Gesamtstärke von etwa 5000 bis 25 000 dtex aufweisen.

4. Fördergurt nach einem der Ansprüche 1 bis 3, dadurch gekennzeichnet, dass für die Steifkorde (5) dehnungsarme vollsynthetische Fasern verwendet werden.

5. Fördergurt nach Anspruch 4, dadurch gekennzeichnet, dass Polyester oder aromatische Polyamide aus aromatischen Diaminen und Arylendicarbonsäuren für die vollsynthetischen Fasern verwendet sind.

6. Fördergurt nach einem der vorhergehenden Ansprüche, dadurch gekennzeichnet, dass die Steifkorde (5) aus verdrehten und verzwirnten Filamenten gebildet und mit dem härtbaren Haftmittel durchtränkt sind.

7. Fördergurt nach einem der vorhergehenden Ansprüche, dadurch gekennzeichnet, dass als härtbares Haftmittel Isocyanat oder Epoxidharz verwendet ist.

8. Fördergurt nach einem der vorhergehenden Ansprüche, dadurch gekennzeichnet, dass die Steifkorde (5) in den Versteifungslagen (3) in einer Teilung von 5 bis 200 Korde pro 10 cm vorgesehen sind.

9. Fördergurt nach einem der vorhergehenden Ansprüche, dadurch gekennzeichnet, dass zumindest einseitig des Zugträgers (2), vorzugsweise zwischen diesem und der Versteifungslage (3), eine Zwischenlage aus in ein Elastomer eingebetteten quer zur Laufrichtung orientierten textilen Fasern, die mit dem Elastomer haftend verbunden sind, angeordnet sind.

## Claims

1. A conveyor belt finished to be transversely rigid, of elastomeric material (4) in which are embedded at least one layer of tension-carrying members (2) running in the direction of movement and at least one layer having cords of fully synthetic fibres and running at an angle of inclination with respect to the direction of movement, characterised in that the cords are fomed as rigid cords (5), the bonding agent of which, impregnating the filaments, is cured, and are aligned angularly in at least one reinforcing layer (3) at an angle of inclination exceeding 45° with respect to the direction of movement.

2. A conveyor belt according to Claim 1, characterised in that at least two reinforcing layers (3) are provided, in which the rigid cords (5) cross one under the other.

3. A conveyor belt according to Claim 1 or 2, characterised in that the rigid cords (5) have a total thickness of approximately 5000 to 25 000 dtex.

4. A conveyor belt according to one of Claims 1 to 3, characterised in that fully synthetic fibres with limited extensibility are used for the rigid cords (5).

5. A conveyor belt according to Claim 4, characterised in that polyester or aromatic polyamids of aromatic diamines and arylene dicarboxylic acids are used for the fully synthetic fibres.

6. A conveyor belt according to one of the preceding Claims, characterised in that the rigid cords (5) are fomed by twisted and plied filaments and impegnated with the curable bonding agent.

7. A conveyor belt according to one of the preceding Claims, characterised in that isocyanate or epoxy resin is used as curable bonding agent.

8. A conveyor belt according to one of the preceding Claims, characterised in that the rigid cords (5) are provided in the reinforcing layers (3) at a spacing of 5 to 200 cords per 10 cm.

9. A conveyor belt according to one of the preceding Claims, characterised in that an intermediate layer of textile fibres embedded in an elastomer and oriented transversely to the direction of movement, the fibres being adhesively bonded to the elastomer, are arranged on at least one side of the tension-carrying member (2), preferably between the latter and the reinforcing layer (3).

## Revendications

1. Courroie ou bande transporteuse équipée de façon à être rigide transversalement, en matière élastomère (4) dans laquelle sont incorporées au moins une couche de longrines (2) s'étendant dans le sens de marche et au moins une couche de cordes s'étendant dans le sens de la marche selon un certain angle d'inclinaison, en fibres entièrement synthétiques, caractérisée en ce que la corde est conçue sous forme de corde de renforcement (5) dont les fibres sont durcies par un agent adhésif imprégné, et dans au moins une position de renforcement (3) forme un angle d'inclinaison supérieur à 45° par rapport au sens de marche.

2. Courroie ou bande transporteuse selon la revendication 1, caractérisée en ce que sont prévues au moins deux couches de renforcement (3), dans lesquelles les cordes de renforcement (5) se croisent.

3. Courroie ou bande transporteuse selon la revendication 1 ou 2, caractérisée en ce que les cordes de renforcement (5) présentent une densité totale d'environ 500 à 25 000 dtex.

4. Courroie ou bande transporteuse selon l'une des revendications 1 à 3, caractérisée en ce que l'on utilise pour les cordes de renforcement (5) des fibres entièrement synthétiques à extensibilité réduite.

5. Courroie ou bande transporteuse selon la revendication 4, caractérisée en ce que pour les fibres entièrement synthétiques, on utilise des polyesters ou des polyamides aromatiques à partir de diamines aromatiques et des acides arylène-dicarboxyliques.

6. Courroie ou bande transporteuse selon l'une des revendications précédentes, caractérisée en ce que les cordes de renforcement (5) sont formées à partir de filaments tordus et retordus et sont imprégnées de l'agent d'adhérence durcissable.

7. Courroie ou bande transporteuse selon l'une des revendications précédentes, caractérisée en ce qu'en tant qu'agent d'adhérence durcissable, on utilise l'isocyanate ou une résine époxyde.

8. Courroie ou bande transporteuse selon l'une des revendications précédentes, caractérisée en ce que les cordes de renforcement (5) dans les couches de renforcement (3) sont prévues selon une répartition de 5 à 200 cordes pour 10 cm.

9. Courroie ou bande transporteuse selon l'une des revendications précédentes, caractérisée en ce qu'au moins sur un côté de la longrine (2), de préférence entre celle-ci et la couche de renforcement (3), est agencée une couche intermédiaire à partir de fibres textiles orientées transversalement par rapport au sens de marche, incorporées dans un élastomère, fibres qui sont reliées de façon adhésive à l'élastomère.